# EUROPEAN PATENT SPECIFICATION

(11) **EP 0 638 208 B1**
(45) Date of publication and mention of the grant of the patent: **11.03.1998**
(21) Application number: 93911875.8
(22) Date of filing: 27.04.1993
(51) Int. Cl.: H02G 3/04, A62C 2/06

(54) **TRUNKING AND A VENTING ARRANGEMENT FOR FIRE PROTECTION STRUCTURE**
KABELKANAL UND EINE BELÜFTUNGSVORRICHTUNG FÜR EINE BRANDSCHUTZVORRICHTUNG
CONDUIT PROTECTEUR POUR CABLE, ET AGENCEMENT DE VENTILATION POUR UNE STRUCTURE DE PROTECTION CONTRE LES INCENDIES

(30) Priority: 27.04.1992 GB 9209043
(43) Date of publication of application: 15.02.1995
(73) Proprietor: Haclin, Graham John, Newhurst Green, Surrey GU6 7SQ (GB)
(72) Inventor: Haclin, Graham John, Newhurst Green, Surrey GU6 7SQ (GB)
(74) Representative: Everitt, Christopher James Wilders
(86) International application number: GB9300876
(87) International publication number: WO9322814

(56) References cited:
- EP-A- 0 476 945
- DE-A- 3 509 729
- DE-U- 8 509 123
- FR-A- 2 435 844
- GB-A- 1 575 308

## Description

This invention relates to cable trunking for use in any one of a number of applications such as in locomotives, power stations, water or gas treatment plant, chemical process plant, oil rigs, underground railways, mines or aircraft, for cables such as power cables, control cables, data transmission cables and/or optical fibre cables.

The risk of fire and its effect gives rise for concern which should be taken into account in the design of equipment for use in the various applications identified above. This is especially so in the case of locomotives for subterranean use. Cables such as power cables, control cables, data transmission cables and/or optical fibre cables have an operating temperature which is quite low, typically less than 200¦248¦C, so that steps should be taken to protect them from the effects of fire where that is a realistic prospect. Trunking, designed to achieve that objective is known in the art as "safety critical trunking".

FR-A-2 435 844 discloses cable trunking provided on its inside with a fire resistant thermal insulation layer whereby cables within the trunking are maintained at or below their operating temperature in the event of a fire in the surrounding environment. The trunking has double walled sides and bottom. It also has a removable cover. The insulation layer is a coating applied to the inside of the inner walls and the cover. The double walled construction results in the trunking being heavier and more expensive than a single walled trunking would be.

According to one aspect of this invention there is provided cable trunking as claimed in claim 1. Preferred features are claimed by claims 2 and 3.

There has to be provision for access to the interior of trunking, at least during installation. Preferably the trunking is provided with a removable panel line with said fire resistant thermal insulating materia on its surface which faces the interior of the trunking, the panel being removable to provide access to the interior of the trunking during it installation and for maintenance.

The trunking disclosed by FR-A-2 435 844 has vents formed in the inner and outer walls at the sides and bottom. The vents in the outer walls are offset with respect to the vents in the inner walls so that flames cannot strike the cables within the inner walls in the event of fire. However these offset vents allow the ingress of hot gases in the event of a fire which is undesirable. The present invention enables trunking to be formed with gas-tight integrity to prevent such undesirable ingress of hot gases. Such trunking can be light in weight and minimal in bulk.

For cooling purposes in the event of a fire in the surrounding environment, it is desirable to augment the endothermic properties of the insulating material by providing a fire resistant mastic material as claimed in claims 5 and 6.

A preferred form of trunking in which this invention is embodied is purpose built, compact and relatively lightweight, fire-rated and insulated, providing a continuous enclosure to protect cables, such as power cables, control cables, data transmission cables or optical fibre cables as they are led through potentially hazardous environments.

Given the need to provide access to the interior of the trunking during its installation and for maintenance, the question arises of how to maintain the necessary gas-tight integrity of the trunking to the necessary gas-tight integrity of the trunking to prevent ingress of hot gases in the event of a fire in the surrounding environment.

Accordingly in a preferred embodiment both the removable panel and the remainder of the trunking structure are as is claimed in claim 6. The increase in pressure within the trunking in the event of a fire within the surrounding environment is caused in part by vapour released from chemically bound water within the lining of insulating material and the endothermic mastic. Other factors include the expansion of the air within the trunking and the fact that the space available for it within the trunking will be reduced by the expansion of the intumescent lining material.

Cables such as power cables, control cables, data transmission cables or optical fibre cables give off heat during operation. Thus it is desirable to ventilate the space immediately surrounding them to avoid overheating during normal operation. The need to ventilate the interior of trunking is in conflict with the need to protect the cables from the effects of fire outside the trunking.

According to a feature of the present invention, the lined trunking is provided with normally open venting means as claimed in claims 7 to 9. Where there is a plurality of vents, the majority of the vents are conveniently formed in the part of the trunking that will be closest to any fire, say at the bottom of trunking which is designed to run along the top of an enclosure, the remainder being formed in the top of the trunking so as to provide air circulation and maximum ventilation in normal circumstances, but, in the event of a fire outside the trunking, to close the vents rapidly.

Conveniently the trunking has a rectangular cross-section, the removable panel being at one side, and an elongate channel section tray may be provided within the trunking along which it extends with the mouth of the channel facing the removable panel, the inner tray providing support for each cable and in turn being supported by the lining material that lines the remainder of outer casing structure of the trunking as distinct from the removable panel.

Further preferred features of the trunking are claimed in claims 10 to 13. The inner tray is connected to the outer structure of the trunking by linking means as claimed in claim 12 in order to secure the inner tray within the trunking and to earth it without forming a thermal bridge between the exposed external surface of the trunking and the inner tray, and in order to minimise the use of adhesives.

The or each cable may be coated with intumescent and/or endothermic material for additional thermal insulation and fire resistance.

One form of trunking in which this invention is embodied and a modification thereof will be described now by way of example with reference to the accompanying drawings, of which:-
Figure 1 is a partially cut away fragmentary view in perspective of a length of trunking with five cables extending through it;

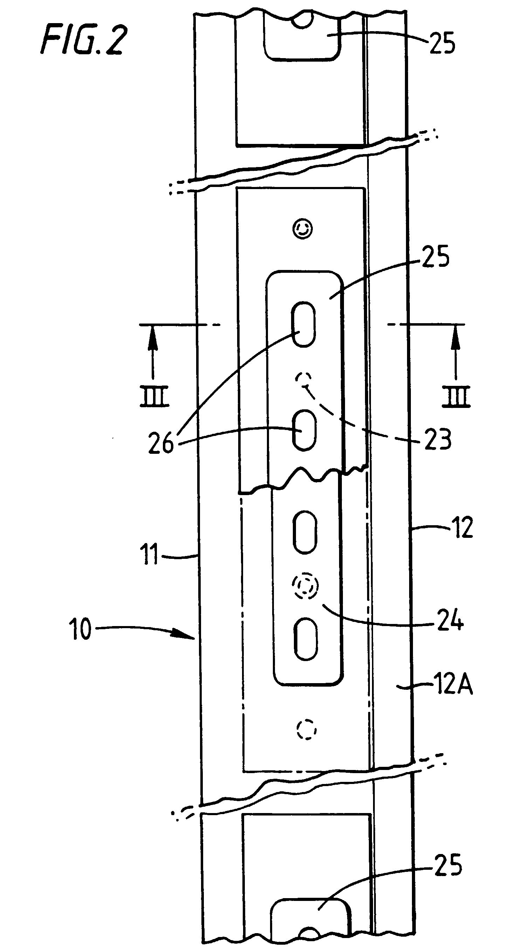

Figure 2 is a partially cut away plan view of fragments of the trunking shown in Figure 1;
Figure 3 is a section on the line III-III in Figure 2;

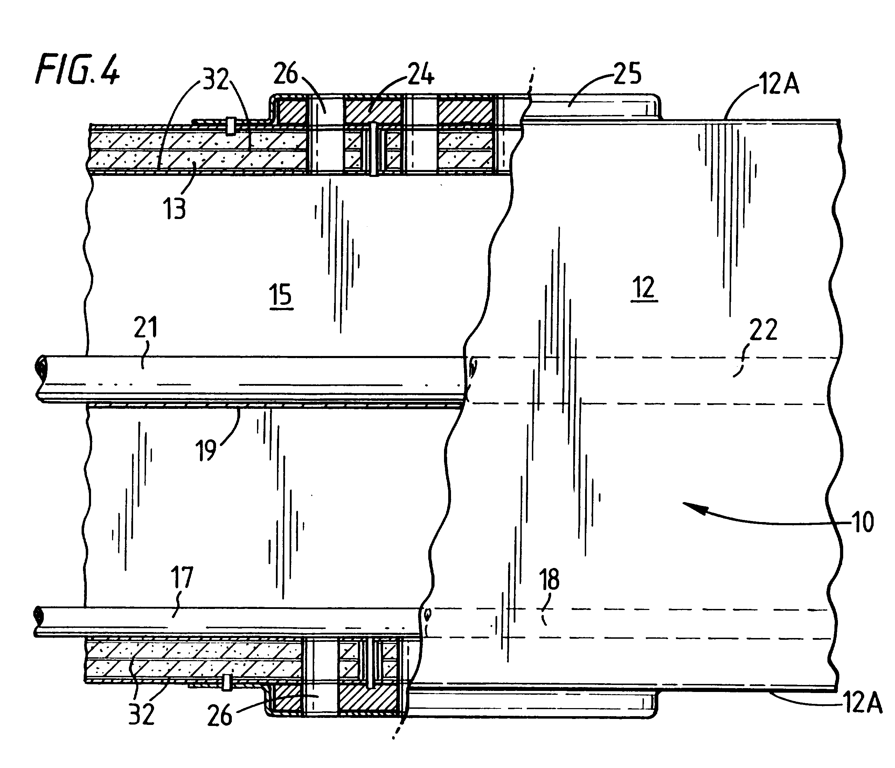

Figure 4 is a partially sectioned side view of the trunking shown in Figures 1-3, the section being on the line IV-IV in Figure 3; and
Figure 5 is a section similar to Figure 3 of a modified form of the trunking.

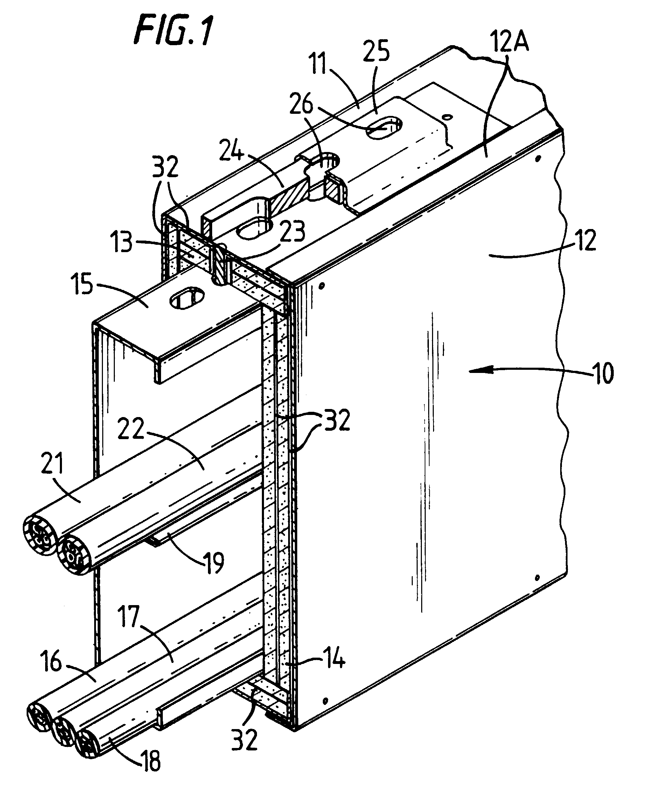

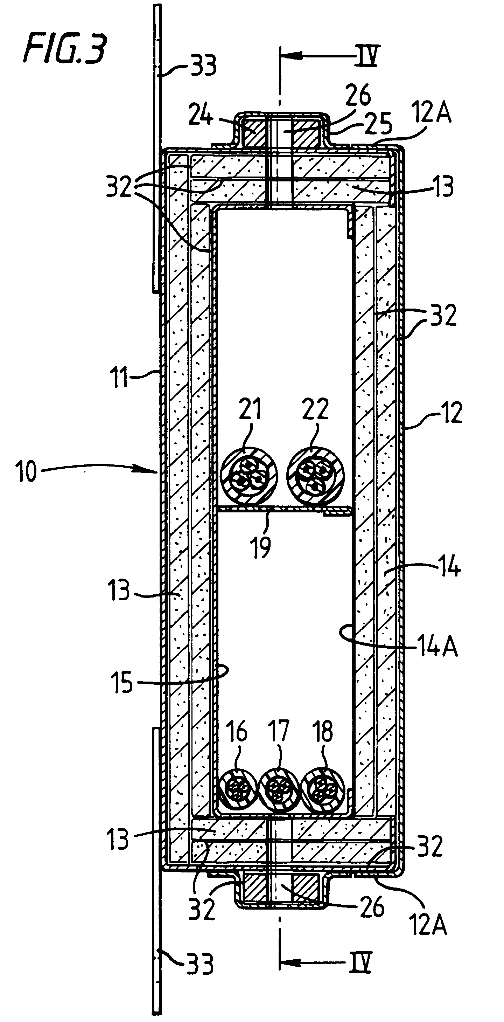

Figures 1 and 3 show the trunking 10 is a rectangular section tube made in two parts, one part 11 being a generally C section metal outer casing portion which forms one larger side and the two shorter sides of the rectangle and two flanges which project one from each of the shorter sides at the edge thereof remote from the one larger side, toward one another in substantially the same plane, the other part 12 being a removable metal panel which is adapted to be releaseably secured by suitable fastening means to the two flanges of the C section part 11 so that the panel 12 closes the opening formed between the two flanges and completes the outer casing of the trunking. The other part 12 is also formed with a channel section. The side flanges 12A of the part 12 are fitted outside the side portions of the part 11 and are of sufficient length to provide a gas-tight seal between each of them and the respective side portion of the part 11.

The interior surface of the outer casing part 11 is lined with a mat 13 of a felt-like fabric formed of compressed ceramic fibres. The face of the panel 12 which is an inner face of the trunking 10 is also lined with such a mat 14 of compressed ceramic fibres on an aluminium foil backing 14A which forms the inner surface. Thus the interior of the trunking 10 is surrounded by a tubular layer of the felt-like mat of compressed ceramic fibres, that tubular layer being supported and located by the tubular metal outer casing structure 11 and 12 which it lines. The mat of compressed ceramic fibres may be formed from one of the known asbestos substitutes such as 3M Interam I10A, or Kaowool. These materials withstand high temperatures whilst also providing thermal insulation. In addition, Interam I10A has intumescent properties, typically expanding 2 or 3 times its volume when heated above 350°C. It would also be appropriate to use materials having endothermic properties which, in the event of a fire, would cause cooling of the interior of the trunking by the process of latent heat of evaporation due to their high levels of retained water of crystallisation. Interam I10A has such endothermic properties, its ingredients being Vermiculite 45-60%, Aluminium Silicate 30-45% and Acrylic Resin 6-13%.

Figures 1 and 3 show that an inner channel section tray 15 is supported on the compressed ceramic fibre mat material that lines the inner surface of the C section outer casing part 11. The inner tray 15 which is formed of a high temperature fire-resistant plastics material, supports three cables 16-18 side by side on its lower inner surface and has an integral shelf element 19 extending parallel to its top and bottom surfaces intermediate those surfaces on which two more cables 21 and 22 are supported. The inner tray 15 is supported from the top and bottom portions of the C section outer casing part 11 which form the two shorter sides of the rectangle casing, by spaced ties 23 which are each secured by one end to the tray 15 and by their other end to the metal out casing part 11. A strip 24 of another intumescent material is laid over the junctions of each tie 23 with the metal out casing part 11. That strip 24 is held in place by a top hat section cover 25 which extends over that strip 24 and is secured to the metal out casing part 11 by its flanges. The space contained within the top hat section 25 that is closed by the metal out casing part 11 is filled with the strip 24 of intumescent material. The intumescent material chosen has a higher rate of volumetric expansion than does the intumescent material employed to line the outer casing structure of the trunking 10 and expands at a lower temperature than does that lining material, say at a temperature of the order of 175-200°C. Suitable material includes 3M CP-25 mastic (ingredients heat resistant plasticized rubber resin 66-79%, 2-Butanone 10-15%, Xylene 10-15%, Amorphous Silica 1-4%, and Iron Oxide 1-4%), 3M CP-25 WB waterbased mastic, and 3M FS195 intumescent strip material (ingredients synthetic rubber, silicate salts, synthetic resin, acrylic adhesive (all bound) and paper liner 75-92%, crystalline silica (bound) 8-10%, Di(2-ethylhexyl) phthalate (bound) 8-10% and lead tetroxide (bound) 2%).

Vents 26 are formed at spaced locations in the top and bottom walls of the lined trunking 10, each of those vents 26 extending through the lining 13, the metal outer casing part 11, the strip 24 of intumescent material and the top hat section 25. These vents 26 allow heat given off by the cables 16-18, 21 and 22 within the trunking 10 to be dissipated so that the risk of heat build up within the trunking 10 is reduced.

In the event of a fire, the strip 24 of intumescent material will expand when the surrounding temperature rises to a temperature of the order of 175-200°C. Due to its high rate of volumetric expansion, the intumescent material of the strip 24, being constrained by the structure of the top hat section 25, expands to form a rigid carbon plug which closes the respective vent 26 through it and thereby to substantially completely enclose the interior of the trunking 10 with fire resistant, thermal insulating material so that the cables 16-18, 21 and 22 within that trunking 10 are protected from the full effects of the fire.

There will be an increase in pressure within the trunking. That pressure increase is caused in part by vapour released from chemically bound water within the lining of intumescent material 13,14. That increase in pressure within the trunking causes outwards doming of the main portion of the panel 12 with the result that the side flanges 12A of the panel 12 are urged against the side flanges of the casing part 11 whereby to maintain the gas tight seal against ingress of hot gases from the fire to the interior of the trunking.

The majority of the vents 26 will be formed in the bottom surface of the trunking 10, where their effectiveness will be optimised because they will be closer to the fire. The remainder are formed in the top of the trunking 10 so that they will respond to the resultant hot air that will rise and so that there will be a through draft whereby air circulation through the trunking will be encouraged. The spacing of the vents 26 at the top and at the bottom is chosen in accordance with the thermal loading generated by the heat output of the cables 16-18.

The expansion of the inner lining material 13 and 14 on the removable panel 12 will cause that material to expand inwardly into intimate contact with the cables 16-18, 21 and 22 so as to provide additional protection for the cables 16-18, 21 and 22. As a result the volume of the interior of the trunking would be reduced which is another factor contributing to the increase in pressure within the trunking which caused doming of the removable panel. The thickness of the ceramic material could be increased to provide increased and/or longer lasting thermal insulation and fire protection. The surfaces of the inner tray 15, including its shelf 19, are conveniently lined with a layer of ceramic material whereby to provide further insulation from the cables 16-18, 21 and 22 between them and the inner tray 19. The cables 16-18, 21 and 22 themselves may be coated with a layer of intumescent and/or endothermic material to provide them with further insulation and fire resistance.

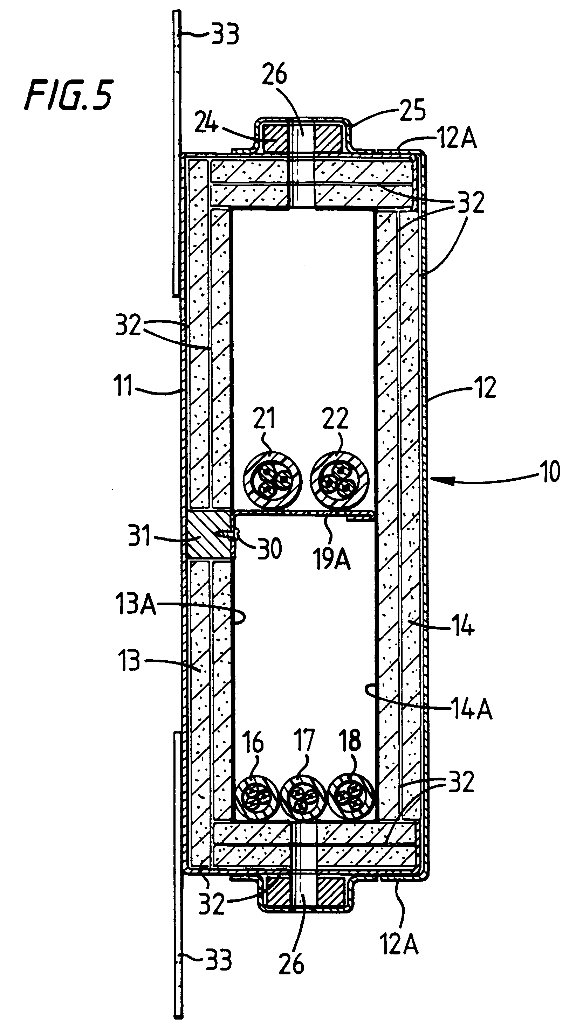

The inner tray 15 may be omitted as shown in Figure 5. This has the advantage of reducing weight and facilitates application of the invention to complex trunking shapes. The inner surfaces of the lining 13A and 14A are formed by aluminium foil backing sheets. Cables 16,17 and 18 run along the bottom of the interior of the trunking, resting on the aluminium foil. The interior of the trunking is divided into separate compartments by respective perforated barriers of which a typical one is shown at 19A. Each barrier 19A is mounted on the casing part 11 by a respective ceramic stand-off spacer 31 to which it is fixed by a screw 30. Each spacer 31 is secured to the inner wall of the outer casing part 11 by a fire rated adhesive or is fixed by suitable mechanical means. Cables 21 and 22, run one on each perforated barrier 19A. It is desirable to augment the endothermic properties of the lining material forming the lining 13,14. To that end a fire resistant mastic material 32 is provided at interfaces between the various component parts of the trunking as can be seen from Figure 5. The mastic material which conveniently may be 3M Firedam 150 Caulk endothermic mastic material (ingredients aluminium hydroxide 60-90% and reinforced heat resistant polymer resin 7-35%) has additional endothermic properties superior to that of the material which forms the lining 13,14.

Figures 3 and 5 both show the trunking provided with wall or floor mountings (33).

Earthing connections between internal structure and the outer casing are provided as necessary. Where possible such earthing connections are connected to portions of the outer casing which are covered by strips 24. However in certain situations, such earthing connections are through the ceramic stand-off spaces 31, but these are kept to a minimum.

The design is fully compatible with standard electromagnetic shielding techniques. Specifically this comprises the combination of the perforated barriers 19 which are formed of metal and which divide the interior of the trunking into compartments, and the aluminium foil 13A,14A which forms the inner surfaces of the trunking and which is electrically conductive.

## Claims

1. Cable trunking (10) provided on its inside with a fire resistant thermal insulation layer whereby cables (16-18,21,22) within the trunking (10) are maintained at or below their operating temperature in the event of a fire in the surrounding environment, characterised in that the fire resistant thermal insulation layer comprises a lining of fire resistant thermal insulating material (13,14) which is a mat of felt-like fabric formed of compressed ceramic fibres.

2. Cable trunking (10) according to claim 1, wherein the pressed ceramic fibres are on a metal foil backing (13A,14A).

3. Cable trunking (10) according to claim 1 or claim 2, wherein the insulating material (13,14) is intumescent and/or endothermic.

4. Cable trunking (10) according to any one of claims 1 to 3 provided with a fire resistant mastic material (32) at interfaces between various components of the trunking (10).

5. Cable trunking (10) according to claim 4, wherein the endothermic properties of the mastic material (32) are superior to that of the fibrous insulating material (13,14).

6. Cable trunking (10) according any one of claims 1 to 5, provided with a removable panel (12) lined with said fire resistant thermal insulating material (14) on its surface with faces the interior of the trunking (10), the panel (12) being removable to provide access to the interior of the trunking (10), during its installation and for maintenance, wherein both the removable panel (12) and the remainder (11) of the trunking structure are formed with a channel section, the side flanges (12A) of the panel (12) being fitted outside the side flanges of the remainder (11) and being sufficiently deep relative to the side flanges of the remainder (11) to provide a gas-tight seal therebetween, the arrangement being such that in the event of a fire within the surrounding environment an increase in the pressure within the trunking (10) causes doming of the main portion of the panel (12) with the result that the side flanges (12A) of the panel (12) are urged against the side flanges of the remainder (11) of the trunking structure whereby to maintain the pressure-tight seal.

7. Cable trunking (10) according to any one of claims 1 to 6, provided with normally-open venting means whereby heat emitted by a cable (16-18,21,22) within the trunking (10) can dissipate from within the trunking (10), there being thermally responsive means (24) operable in the event of a fire in the surrounding environment, to close the venting means when heated to a certain temperature below the maximum operating temperature of the cable (16-18,21,22) whereby to maintain the cable (16-18,21,22) at or below its maximum operating temperature, wherein the thermally responsive means (24) comprise fire resistant intumescent material which forms the perimeter of part of the or each vent (26) of the venting means and which expands to close the or each vent (26) when subjected to said certain temperature.

8. Cable trunking (10) according to claim 7, wherein the fire resistant intumescent material which forms the perimeter of part of the vent (26) is enclosed within a respective rigid housing (25) which constrains its expansion such that the respective vent (26) is closed, the intumescent material forming a thermally insulating rigid carbon plug which closes the respective vent (26).

9. Cable trunking (10) according to either of claims 7 and 8 when appended to claim 3, wherein the insulating material is intumescent and the rate of volumetric expansion of the fire resistant thermal insulating material (13,14) that forms the lining is less than that of the intumescent insulating material (24) that expands to close the or each vent (26).

10. Cable trunking (10) according to any one of claims 1 to 9, having a rectangular section and provided with a removable panel (12) lined with said fire resistant thermal insulating material (14) on its surface which faces the interior of the trunking (10), the panel (12) being removable to provide access to the interior of the trunking (10), during its installation and for maintenance, the removable panel (12) being at one side, and an elongate channel section tray (15) being provided within the trunking (10) along which it extends with the mouth of the channel facing the removable panel (12), the inner tray (15) providing support for each cable (16-18) and in turn being supported by the lining material (13) that lines the remainder (11) of the outer casing structure of the trunking (10) as distinct from the removable panel (12).

11. Cable trunking (10) according to claim 8, or either of claims 9 and 10 or when appended to claim 8, wherein the fire resistant intumescent material (24) that expands to close the or each vent (26) is laid on the outer surface of the outer casing structure of the trunking (10) within its constraining housing (25), the remainder of the or each vent (26) extending through the outer casing structure and the lining (13) in line with the part of the outer layer of intumescent thermal insulating material (24).

12. Cable trunking (10) according to claim 11 when appended to claim 10, wherein the inner tray (15) is connected to the outer structure of the trunking (10) by linking means (30 and 31) which are joined to the outer structure of the trunking (10) at a location overlaid by the fire resistant intumescent material (24) that expands to close a vent (26).

13. Cable trunking (10) according to claim 11 or claim 12, wherein a thin layer of ceramic material is provided between the inner tray (15) and each cable (16-18) supported by that tray (15) whereby to insulate each cable (16-18) from the tray (15).

## Patentansprüche

1. Kabelkanal (10), der an seiner Innenseite mit einer flammhemmenden Wärmeisolationsschicht versehen ist, wobei Kabel (16 - 18, 21, 22) in dem Kabelkanal (10) bei einem Brand in ihrer nahen Umgebung auf oder unter ihrer Betriebstemperatur gehalten werden, dadurch gekennzeichnet, daß die flammhemmende Wärmeisolationsschicht eine Auskleidung aus flammhemmendem Wärmeisolationsmaterial (13, 14) umfaßt, bei der es sich um eine Matte aus filzartigem Gewebe, das aus komprimierten Keramikfasern gebildet ist, handelt.

2. Kabelkanal (10) nach Anspruch 1, bei dem sich die gepreßten Keramikfasern auf einer Metallfolienunterlage (13A, 14A) befinden.

3. Kabelkanal (10) nach Anspruch 1 oder 2, bei dem das Isolationsmaterial (13, 14) intumeszierend und/oder endotherm ist.

4. Kabelkanal (10) nach einem der Ansprüche 1 bis 3, der an sich zwischen verschiedenen Komponenten des Kabelkanals (10) befindenden Grenzflächen mit einem flammhemmenden Mastixmaterial (32) versehen ist.

5. Kabelkanal (10) nach Anspruch 4, bei dem die endothermen Eigenschaften des Mastixmaterials (32) denen des fasrigen Isolationsmaterials (13, 14) überlegen sind.

6. Kabelkanal (10) nach einem der Ansprüche 1 bis 5, der mit einer abnehmbaren Platte (12) versehen ist, die auf ihrer zum Innern des Kabelkanals (10) weisenden Fläche mit dem flammhemmenden Wärmeisolationsmaterial (14) ausgekleidet ist, wobei die Platte (12) abnehmbar ist, damit während seiner Installation und zur Wartung Zugang zum Innern des Kabelkanals (10) gewährleistet wird, wobei sowohl die abnehmbare Platte (12) als auch der Rest (11) der Kabelkanalkonstruktion mit einem Kanalprofil ausgebildet ist, wobei die Seitenflansche (12A) der Platte (12) außerhalb der Seitenflansche des Rests (11) angebracht und bezüglich der Seitenflansche des Rests (11) tief genug sind, dazwischen eine Gasdichtung bereitzustellen, wobei die Anordnung derart ist, daß bei einem Brand in der nahen Umgebung eine Erhöhung des Drucks in dem Kabelkanal (10) ein Wölben des Hauptteils der Platte (12) verursacht, wodurch die Seitenflansche (12A) der Platte (12) an die Seitenflansche des Rests (11) der Kabelkanalkonstruktion gedrängt werden und dadurch die Druckdichtung aufrechterhalten wird.

7. Kabelkanal (10) nach einem der Ansprüche 1 bis 6, der mit einem normalerweise geöffneten Lüftungsmittel versehen ist, wodurch von einem Kabel (16 - 18, 21, 22) in dem Kabelkanal (10) ausgestrahlte Wärme aus dem Kabelkanal (10) abgeführt werden kann, wobei auf Wärme ansprechende Mittel (24) bei einem Brand in der nahen Umgebung derart betätigbar sind, daß sie das Lüftungsmittel bei Erwärmung auf eine bestimmte unter der maximalen Betriebstemperatur des Kabels (16 - 18, 21, 22) liegenden Temperatur schließen, wodurch das Kabel (16 - 18, 21, 22) auf oder unter seiner maximalen Betriebstemperatur gehalten wird, wobei die auf Wärme ansprechenden Mittel (24) ein flammhemmendes Intumeszenzmaterial enthalten, das den Umfang eines Teils der oder jeder Lüftung (26) des Lüftungsmittels bildet und sich zur Schließung der oder jeder Lüftung (26) ausdehnt, wenn es der bestimmten Temperatur ausgesetzt ist.

8. Kabelkanal (10) nach Anspruch 7, bei dem das flammhemmende Intumeszenzmaterial, das den Umfang eines Teils der Lüftung (26) bildet, in einem jeweiligen starren Gehäuse (25) eingeschlossen ist, das seine Ausdehnung derart beschränkt, daß die jeweilige Lüftung (26) geschlossen ist, wobei das Intumeszenzmaterial einen wärmeisolierenden, starren Kohlenstoffstopfen bildet, der die jeweilige Lüftung (26) schließt.

9. Kabelkanal (10) nach einem der Ansprüche 7 und 8, sofern sie von Anspruch 3 abhängig sind, bei dem das Isolationsmaterial intumeszierend ist und die Rate der volumetrischen Ausdehnung des die Auskleidung bildenden flammhemmenden Wärmeisolationsmaterials (13, 14) geringer ist als die des intumeszierenden Isolationsmaterials (24), das sich zur Schließung der oder jeder Lüftung (26) ausdehnt.

10. Kabelkanal (10) nach einem der Ansprüche 1 bis 9, der einen rechteckigen Querschnitt aufweist und mit einer abnehmbaren Platte (12) versehen ist, die auf ihrer zum Innern des Kabelkanals (10) weisenden Fläche mit dem flammhemmenden Wärmeisolationsmaterial (14) ausgekleidet ist, wobei die Platte (12) abnehmbar ist, damit während seiner Installation und zur Wartung Zugang zum Innern des Kabelkanals (10) gewährleistet wird, wobei sich die abnehmbare Platte (12) auf einer Seite befindet und eine längliche Wanne (15) mit Rinnenprofil in dem Kabelkanal (10) vorgesehen ist, entlang der sie sich erstreckt, wobei die Öffnung der Rinne zu der abnehmbaren Platte (12) weist, wobei die innere Wanne (15) jedes Kabel (16 - 18) stützt und wiederum durch das Auskleidungsmaterial (13) gestützt wird, das den Rest (11) der äußeren Verkleidungskonstruktion des Kabelkanals (10) im Unterschied zu der abnehmbaren Platte (12) auskleidet.

11. Kabelkanal (10) nach Anspruch 8 oder einem der Ansprüche 9 und 10, insofern diese von Anspruch 8 abhängig sind, wobei das flammhemmende Intumeszenzmaterial (24), das sich zur Schließung der oder jeder Lüftung (26) ausdehnt, auf der Außenfläche der äußeren Verkleidungskonstruktion des Kabelkanals (10) in seinem begrenzenden Gehäuse (25) aufgebracht wird, wobei sich der Rest der oder jeder Lüftung (26) in Ausrichtung auf den Teil der Außenschicht des intumeszierenden Wärmeisolationsmaterials (24) durch die äußere Verkleidungskonstruktion und die Auskleidung (13) erstreckt.

12. Kabelkanal (10) nach Anspruch 11, insofern er von Anspruch 10 abhängig ist, wobei die innere Wanne (15) durch Verbindungsmittel (30 und 31) mit der Außenkonstruktion des Kabelkanals (10) verbunden ist, welche an einer Stelle, auf der das flammhemmende Intumeszenzmaterial (24), das sich zur Schließung einer Lüftung (26) ausdehnt, aufgebracht ist, an der Außenkonstruktion des Kabelkanals (10) angefügt sind.

13. Kabelkanal (10) nach Anspruch 11 oder 12, bei dem eine dünne Schicht aus keramischem Material zwischen der inneren Wanne (15) und jedem Kabel (16 - 18), das durch die Wanne (15) gestützt wird, vorgesehen ist, damit so jedes Kabel (16 - 18) von der Wanne (15) isoliert wird.

## Revendications

1. Conduit pour câble (10) pourvu, à l'intérieur, d'une couche d'isolation thermique ignifuge, grâce à laquelle les câbles (16-18, 21, 22) à l'intérieur du conduit (10) sont maintenus à ou en dessous de leur température de fonctionnement en cas d'incendie dans l'environnement alentour, caractérisé en ce que la couche d'isolation thermique ignifuge comprend une doublure de matériau isolant thermique ignifuge (13, 14) qui est un tapis de tissu analogue à du feutre formé à partir de fibres céramiques comprimées.

2. Conduit pour câble (10) selon la revendication 1, dans lequel les fibres céramiques comprimées sont sur un support en feuille métallique (13A, 14A).

3. Conduit pour câble (10) selon la revendication 1 ou la revendication 2, dans lequel le matériau isolant (13, 14) est intumescent et/ou endothermique.

4. Conduit pour câble (10) selon l'une quelconque des revendications 1 à 3, pourvu d'un matériau de mastic ignifuge (32) au niveau des interfaces entre divers composants du conduit (10).

5. Conduit pour câble (10) selon la revendication 4, dans lequel les propriétés endothermiques du matériau de mastic (32) sont supérieures à celles du matériau isolant fibreux (13, 14).

6. Conduit pour câble (10) selon l'une quelconque des revendications 1 à 5, pourvu d'un panneau amovible (12) revêtu dudit matériau isolant thermique ignifuge (14) sur sa surface faisant face à l'intérieur du conduit (10), le panneau (12) étant amovible pour permettre l'accès à l'intérieur du conduit (10), au cours de son installation et pour la maintenance, à la fois le panneau amovible (12) et le reste (11) de la structure du conduit étant formés avec une section de canal, les brides latérales (12A) du panneau (12) étant ajustées en dehors des brides latérales du reste (11) et étant suffisamment profondes par rapport aux brides latérales du reste (11) pour fournir un joint étanche aux gaz entre celles-ci, l'arrangement étant tel qu'en cas d'incendie à l'intérieur de l'environnement alentour, une augmentation de pression à l'intérieur du conduit (10) provoquera la déformation en dôme de la portion principale du panneau (12) avec pour résultat que les brides latérales (12A) du panneau (12) seront poussées contre les brides latérales du reste (11) de la structure de conduit, pour ainsi maintenir le joint étanche à la pression.

7. Conduit pour câble (10) selon l'une quelconque des revendications 1 à 6, pourvu de moyens d'aération normalement ouverts, la chaleur émise par un câble (1618, 21, 22) à l'intérieur du conduit (10) pouvant être dissipée depuis l'intérieur du conduit (10), un moyen (24) réagissant thermiquement étant actionnable en cas d'incendie dans l'environnement alentour, afin de fermer les moyens d'aération lorsqu'il est chauffé à une certaine température en dessous de la température de fonctionnement maximale du câble (16-18, 21, 22), pour ainsi maintenir le câble (16-18, 21, 22) à ou en dessous de sa température de fonctionnement maximale, le moyen réagissant thermiquement (24) comprenant un matériau intumescent ignifuge qui forme la périphérie d'une partie du ou de chaque orifice d'aération (26) du moyen d'aération et qui se dilate pour fermer le ou chaque orifice d'aération (26) lorsqu'il est soumis à ladite certaine température.

8. Conduit pour câble (10) selon la revendication 7, dans lequel le matériau intumescent ignifuge qui forme la périphérie d'une partie de l'orifice d'aération (26) est enfermé à l'intérieur d'un logement respectif rigide (25) qui limite son expansion de telle sorte que l'orifice d'aération respectif (26) soit fermé, le matériau intumescent formant un bouchon de carbone rigide isolant thermique qui ferme l'orifice d'aération respectif (26).

9. Conduit pour câble (10) selon l'une ou l'autre des revendications 7 et 8 lorsqu'elles dépendent de la revendication 3, dans lequel le matériau isolant est intumescent et le taux de dilatation volumétrique du matériau isolant thermique ignifuge (13, 14) qui forme la doublure est inférieur à celui du matériau isolant intumescent (24) qui se dilate pour fermer le ou chaque orifice d'aération (26).

10. Conduit pour câble (10) selon l'une quelconque des revendications 1 à 9, ayant une section rectangulaire et étant pourvu d'un panneau amovible (12) revêtu dudit matériau isolant thermique ignifuge (14) sur sa surface faisant face à l'intérieur du conduit (10), le panneau (12) étant amovible pour permettre l'accès à l'intérieur du conduit (10), au cours de son installation et pour la maintenance, le panneau amovible (12) étant d'un côté, et un chemin de câble (15) de section en canal allongé étant prévu à l'intérieur du conduit (10) le long duquel il s'étend, avec l'ouverture du canal en face du panneau amovible (12), le chemin de câble interne (15) assurant le support de chaque câble (16-18) et étant à son tour supporté par le matériau de doublure (13) qui revêt le reste (11) de la structure de boîtier externe du conduit (10), sous forme distincte du panneau amovible (12).

11. Conduit pour câble (10) selon la revendication 8, ou selon l'une ou l'autre des revendications 9 et 10 lorsqu'elles dépendent de la revendication 8, dans lequel le matériau intumescent ignifuge (24) qui se dilate pour fermer le ou chaque orifice d'aération (26) est posé sur la surface externe de la structure de boîtier externe du conduit (10) à l'intérieur de son logement restrictif (25), le reste du ou de chaque orifice d'aération (26) s'étendant à travers la structure de boîtier externe et la doublure (13) en ligne avec la partie de la couche externe du matériau isolant thermique intumescent (24).

12. Conduit pour câble (10) selon la revendication 11 lorsqu'elle dépend de la revendication 10, dans lequel le chemin de câble interne (15) est connecté à la structure externe du conduit (10) par des moyens de liaison (30 et 31) qui sont joints à la structure externe du conduit (10) au niveau d'une position recouverte par le matériau intumescent ignifuge (24) qui se dilate pour fermer un orifice d'aération (26).

13. Conduit pour câble (10) selon la revendication 11 ou la revendication 12, dans lequel une fine couche de matériau céramique est prévue entre le chemin de câble interne (15) et chaque câble (16-18) supporté par ce chemin de câble (15), pour ainsi isoler chaque câble (16-18) du chemin de câble (15).
